# EUROPÄISCHE PATENTSCHRIFT

(11) **EP 1 628 859 B1**
(45) Veröffentlichungstag und Bekanntmachung des Hinweises auf die Patenterteilung: **27.06.2007**
(21) Anmeldenummer: 04734819.8
(22) Anmeldetag: 26.05.2004
(51) Int. Cl.: B60R 22/20, B60R 22/195, B60R 22/03

(54) **GURTSCHLOSSVORRICHTUNG FÜR EINEN FAHRZEUGSITZ**
BELT BUCKLING DEVICE FOR A VEHICLE SEAT
DISPOSITIF DE FERMETURE DE CEINTURE DE SECURITE POUR UN SIEGE DE VEHICULE

(30) Priorität: 05.06.2003 DE 10325473
(43) Veröffentlichungstag der Anmeldung: 01.03.2006
(73) Patentinhaber: KEIPER GmbH & Co. KG, 67657 Kaiserslautern (DE)
(72) Erfinder: HIPPEL, Daniel, 67722 Winnweiler (DE); KÖNIG, Michael, 67688 Rodenbach (DE); REISCHMANN, Martin, 66989 Hoehfroeschen (DE); SCHNEIDER, Henning, 67752 Wolfstein (DE); EDRICH, Hans, 67716 Heltersberg (DE); DIEHL, Andreas, 67731 Otterbach (DE)
(74) Vertreter: Patentanwälte Hosenthien-Held und Dr. Held
(86) Internationale Anmeldenummer: PCT/EP2004/005632
(87) Internationale Veröffentlichungsnummer: WO 2004/108487

(56) Entgegenhaltungen:
- DE-A- 3 044 834
- DE-A- 19 941 435
- US-A1- 2002 167 212
- US-A1- 2003 075 914

## Beschreibung

Die Erfindung betrifft eine Gurtschlossvorrichtung für einen Fahrzeugsitz mit den Merkmalen des Oberbegriffs des Anspruches 1.

Eine aus der DE 199 41 453 A1 bekannte Gurtschlossvorrichtung dieser Art hat eine dreistufige Gurtstrafferfunktion mit zwei reversiblen Stufen, welche durch eine federunterstützte Bewegung des Straffereinheit mittels eines Antriebs eingenommen werden, und einer dritten, irreversiblen Stufe, welche im Crashfall mittels der pyrotechnisch arbeitenden Straffereinheit das Gurtschloss maximal einzieht. Bei einer breiten Mittelkonsole zwischen den Fahrzeugsitzen besteht bei den bekannten Gurtschlossvorrichtungen das Problem, dass ein für einen optimalen Gurtverlauf tief positioniertes Gurtschloss schlecht zugänglich ist.

Der Erfindung liegt die Aufgabe zu Grunde, eine Gurtschlossvorrichtung der eingangs genannten Art zu verbessern. Diese Aufgabe wird erfindungsgemäß durch eine Gurtschlossvorrichtung mit den Merkmalen des Anspruches 1 gelöst. Vorteilhafte Ausgestaltungen sind Gegenstand der Unteransprüche.

Dadurch, dass die Position der Straffereinheit relativ zur Abstützung in Längsrichtung des Transmissionsmittels mittels eines Motors veränderlich ist, kann zusätzlich zu der Gurtstrafferfunktion noch eine gegenüber der Ausgangsposition des Gurtschlosses weiter ausgefahrene Komfortposition bereitgestellt werden, in welcher das Gurtschloss leichter zugänglich ist. Nach dem Anschnallen des Insassens wird dann das Gurtschloss wieder in die Ausgangsposition zurückgefahren. Der Antrieb erfolgt mittels des Motors, um einerseits eine bestimmte Bewegung zu definieren und andererseits den Komfort zu erhöhen. Durch die Positionsänderung der Straffereinheit wird das Gurtschloss mittels des Transmissionsmittels bewegt, d.h. Gurtschloss, Transmissionsmittel, Straffereinheit und Abstützung liegen bezüglich des beim Straffen und beim Beanspruchen des Gurtes auftretenden Kraftflusses in Reihe, d.h. für die zwei Möglichkeiten des Straffens des Gurtes (Crash, Komfort) ist eine serielle Lösung verwirklicht. In der Regel ist das Transmissionsmittel zugfest, druckfest und flexibel, wobei eine Feder oder ein anderer Kraftspeicher das Gurtschloss aufgerichtet halten kann.

Als Schutz vor Verschmutzungen und Beschädigungen ist die Abstützung der Straffereinheit vorzugsweise in einem strukturfesten Gehäuse gelagert, welches vorzugsweise noch den Motor aufnimmt und an dem das Gurtschloss abgestützt ist, beispielsweise über eine Umlenkung und die besagte Feder. Die strukturfeste Anbringung des Gehäuses kann beispielsweise am Sitzrahmen, an der Oberschiene, an der Unterschiene oder an der Fahrzeugstruktur erfolgen.

In einer bevorzugten Ausführungsform ist die Abstützung als eine im Gehäuse drehbar gelagerte, durch den Motor angetriebene Spindelmutter ausgebildet, in welche eine Spindel eingedreht ist, wodurch die Motordrehung in eine Verschiebung der Straffereinheit umsetzbar ist bei gleichzeitiger Untersetzung. Die Spindel kann ein Bestandteil der Straffereinheit, d.h. des Straffergehäuses, sein oder optional gesondert ausgebildet und an dem Straffergehäuses anliegen oder angebracht sein. Um Bauraum zu sparen, ist das Transmissionsmittel vorzugsweise durch die dann hohl ausgebildete Spindel geführt.

Die Erfindung ist für alle Fahrzeugsitze mit Gurtstraffer anwendbar. Je nach Steuerung und vorhandenen Sensoren können verschiedene Situationen, wie beispielsweise Einsitzen, Öffnen der Türe, Abschalten des Motors oder ein erfolgter Crash, dazu führen, dass die Komfortposition eingenommen wird.

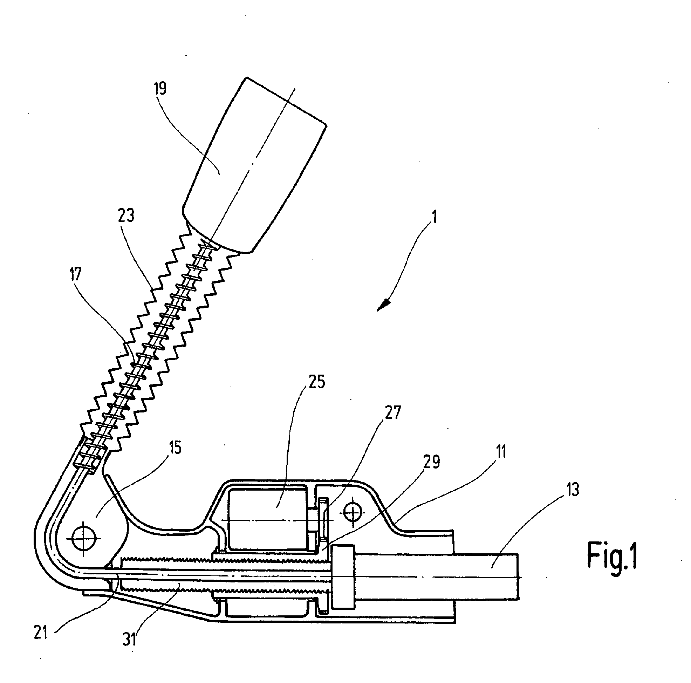

Im folgenden ist die Erfindung anhand eines in der Zeichnung dargestellten Ausführungsbeispiels näher erläutert. Es zeigen
- Fig. 1: einen Schnitt durch das Ausführungsbeispiel in der Komfortposition,
- Fig. 2: eine Seitenansicht des Ausführungsbeispiels in der Ausgangsposition,
- Fig. 3: eine Seitenansicht des Ausführungsbeispiels in der Komfortposition,
- Fig. 4: eine Seitenansicht des Ausführungsbeispiels in der Crashposition,

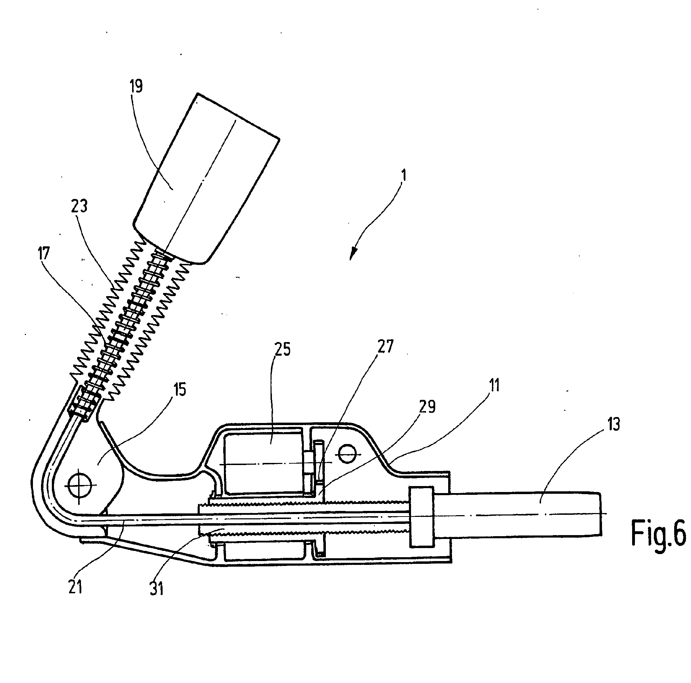

- Fig. 5: eine schematische Seitenansicht eines Fahrzeugsitzes, und
- Fig. 6: einen Schnitt durch das Ausführungsbeispiel in der Ausgangsposition.

Eine Gurtschloßvorrichtung 1 für einen Fahrzeugsitz 3 eines Kraftfahrzeuges ist tunnelseitig am Fahrzeugsitz 3 strukturfest angebracht und dient der lösbaren Befestigung eines Sicherheitsgurtes 5 des Fahrzeugsitzes 3. Die Anordnung des Fahrzeugsitzes 3 innerhalb des Kraftfahrzeuges und dessen gewöhnliche Fahrtrichtung definieren die nachfolgend verwendeten Richtungsangaben. Die Gurtschloßvorrichtung 1 weist ein längliches Gehäuse 11, dessen Längsrichtung in Fahrtrichtung liegt, und eine pyrotechnische Straffereinheit 13 auf, die in Längsrichtung beweglich ist und teilweise innerhalb des Gehäuses 11 angeordnet und ansonsten nach vorne übersteht. Die Gurtschloßvorrichtung 1 weist ferner eine am hinteren Ende des Gehäuses 11 angebrachte Umlenkung 15, eine von der Umlenkung 15 schräg nach oben und vorne abstehende, als Schraubenfeder ausgebildete Feder 17 und ein am oberen Ende der Feder 17 angeordnetes Gurtschloß 19 zur Aufnahme einer Gurtzunge des Sicherheitsgurtes 5 auf.

Ein zugfestes, druckfestes und flexibles Transmissionsmittel 21, vorliegend ein Stahlseil, ist von der Straffereinheit 13 nach hinten über die Umlenkung 15 schräg nach oben und durch die Feder 17 hindurch zum Gurtschloß 19 geführt und an diesem befestigt. Das Transmissionsmittel 21 wirkt somit zwischen der Straffereinheit 13 und dem Gurtschloß 19, das in Längsrichtung des Transmissionsmittels 21 beweglich und quer dazu flexibel am Gehäuse 11 angebracht ist. Ein zwischen dem Gurtschloß 19 und der Umlenkung 15 angebrachter Balg 23, welcher um die Feder 17 herum angeordnet ist, schützt vor Schmutz und anderen Einwirkungen von außen. Im Gehäuse 11 ist ein Motor 25 gelagert, welcher mittels einer Stirnradstufe 27 in Getriebeverbindung mit einer Spindelmutter 29 steht. Die Spindelmutter 29 ist auf eine nichtdrehende, hohle Spindel 31 aufgedreht, welche einen hinteren Bestandteil der Straffereinheit 13 bildet und durch welche das Transmissionsmittel 21 nach hinten geführt ist. Die drehbar im Gehäuse 11 gelagerte Spindelmutter 29 bildet eine Abstützung für die Straffereinheit 13. In der Ausgangsposition befindet sich das hintere Ende der Spindel 31 wenigstens näherungsweise innerhalb der Spindelmutter 29.

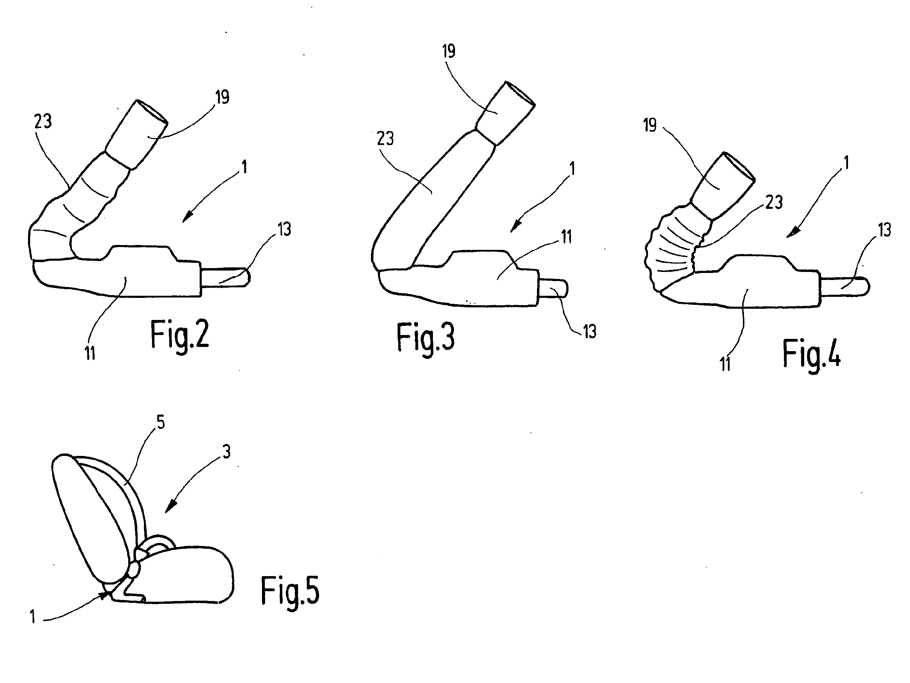

Die Gurtschloßvorrichtung 1 führt im Crashfall die bekannte Gurtstrafferfunktion aus, d.h. die Straffereinheit 13 zündet, und ein Teil desselben fährt - abgestützt an dem mit der Spindel 31 verbundenen Teil - nach vorne, wobei er über das Transmissionsmittel 21 das Gurtschloß 19 entgegen der Kraft der Feder 17 nach unten zieht. Diese Crashposition ist in Fig. 4 dargestellt. Der am Gurtschloß 19 eingeklinkte Sicherheitsgurt 5 wird gestrafft, d.h. eine eventuell vorhandene Gurtlose wird beseitigt, damit der Insasse einen möglichst geringen Weg nach vorne macht.

Die Gurtschloßvorrichtung 1 hat auch eine Komfortfunktion aufgrund einer Positionsveränderung der Straffereinheit 13. Nimmt ein Insasse auf dem Fahrzeugsitz 3 Platz, was durch Sitzbelegungs-Erkennungssensoren gemeldet wird, wird der Motor 25 angesteuert, so daß er über die Spindelmutter 29 die Spindel 31 nach hinten schiebt. Die mitgeführte Straffereinheit 13 bewegt das Transmissionsmittel 21 ebenfalls nach hinten, so daß die Feder 17 den freigegebenen Weg nutzen kann, das Gurtschloß 19 weiter auszufahren, wie in Fig. 3 dargestellt. Das Gurtschloß 19 wird dadurch für den Insassen leichter erreichbar. Sobald der Sicherheitsgurt 5 vollständig angelegt ist, bewegt der Motor 25 die Spindel 31 nach vorne, d.h. zieht das Gurtschloß 19 wieder ein, bis der optimale Gurtverlauf erreicht und die Gurtlose beseitigt ist.

In einer "postsafe"-fähigen Abwandlung wird nach dem Crash, soweit noch möglich, das Gurtschloß 19 durch den Motor 25 ebenfalls in die Komfortposition gebracht, um die Zugänglichkeit zur Bergung des Insassens zu verbessern.

### Bezugszeichenliste

- 1: Gurtschloßvorrichtung
- 3: Fahrzeugsitz
- 5: Sicherheitsgurt
- 11: Gehäuse
- 13: Straffereinheit
- 15: Umlenkung
- 17: Feder
- 19: Gurtschloß
- 21: Transmissionsmittel
- 23: Balg
- 25: Motor
- 27: Stirnradstufe
- 29: Spindelmutter, Abstützung
- 31: Spindel

## Patentansprüche

1. Gurtschlossvorrichtung für einen Fahrzeugsitz, insbesondere für einen Kraftfahrzeugsitz, mit einem beweglich angebrachten Gurtschloss (19) für einen Sicherheitsgurt (5), einer Straffereinheit (13), die an einer strukturfest gelagerten Abstützung (29) abgestützt ist, und einem zwischen der Straffereinheit (13) und dem Gurtschloss (19) wirkenden Transmissionsmittel (21), wobei im Crashfall die Straffereinheit (13) mittels des Transmissionsmittels (21) das Gurtschloss (19) von einer Ausgangsposition in eine Crashposition zieht, wobei die Position der Straffereinheit (13) relativ zur Abstützung (29) in Längsrichtung des Transmissionsmittels (21) veränderlich ist und eine Positionsänderung der Straffereinheit (13) das Gurtschloss (19) mittels des Transmissionsmittels (21) bewegt, **dadurch gekennzeichnet, dass** für eine Komfortfunktion die Straffereinheit (13) in ihrer Position durch einen Motor (25) veränderlich ist, wobei das Gurtschloss (19) weiter ausfährt, nachdem ein Insasse auf dem Fahrzeugsitz (3) Platz genommen hat, und nach dem vollständigen Anlegen des Sicherheitsgurtes (5) der Motor (25) das Gurtschloss (19) wieder einzieht.

2. Gurtschlossvorrichtung nach Anspruch 1, **dadurch gekennzeichnet, dass** das Transmissionsmittel (21) zugfest und/oder druckfest und/oder flexibel ausgebildet ist.

3. Gurtschlossvorrichtung nach Anspruch 1 oder 2, **dadurch gekennzeichnet, dass** die Abstützung (29) in einem strukturfesten Gehäuse (11) gelagert ist.

4. Gurtschlossvorrichtung nach Anspruch 3, **dadurch gekennzeichnet, dass** der Motor (25) im Gehäuse (11) angeordnet ist.

5. Gurtschlossvorrichtung nach Anspruch 3 oder 4, **dadurch gekennzeichnet, dass** die Abstützung eine im Gehäuse (11) drehbar gelagerte, durch den Motor (25) angetriebene Spindelmutter (29) ist, in welche eine Spindel (31) eingedreht ist.

6. Gurtschlossvorrichtung nach Anspruch 5, **dadurch gekennzeichnet, dass** die Spindel (31) an der Straffereinheit (13) anliegt, an dieser angebracht ist und/oder einen Bestandteil derselben bildet.

7. Gurtschlossvorrichtung nach einem der Ansprüche 1 bis 6, **dadurch gekennzeichnet, dass** das Gurtschloss (19), das Transmissionsmittel (21), die Straffereinheit (13) und die Abstützung (29) bezüglich des beim Straffen und beim Beanspruchen des Gurtes (5) auftretenden Kraftflusses in Reihe liegen.

8. Fahrzeugsitz, insbesondere Kraftfahrzeugsitz, mit einer Gurtschlossvorrichtung (1) nach einem der Ansprüche 1 bis 7.

## Claims

1. Belt locking device for a vehicle seat, in particular for a motor vehicle seat, having a movably mounted belt lock (19) for a safety belt (5), a tightening unit (13), which is supported on a support (29) fixedly mounted in the structure, and a transmission means (21) acting between the tightening unit (13) and the belt lock (19), wherein, in the event of a crash, the tightening unit (13) pulls the belt lock (19) from an initial position into a crash position by means of the transmission means (21), wherein the position of the tightening unit (13) relative to the support (29) is alterable in the longitudinal direction of the transmission means (21), and a position change of the tightening unit (13) moves the belt lock (19) by means of the transmission means (21), **characterised in that**, for a comfort function, the position of the tightening unit (13) is alterable by a motor (25), wherein the belt lock (19) extends further after a passenger has sat down on the vehicle seat (3), and after the safety belt (5) has been put on completely the motor (25) retracts the belt lock (19) again.

2. Belt locking device according to Claim 1, **characterised in that** the transmission means (21) is tension-stable and/or pressure-resistant and/or flexible.

3. Belt locking device according to Claim 1 or 2, **characterised in that** the support (29) is mounted in a structure-fixed housing (11).

4. Belt locking device according to Claim 3, **characterised in that** the motor (25) is arranged in the housing (11).

5. Belt locking device according to Claim 3 or 4, **characterised in that** the support is a spindle nut (29), which is rotatably mounted in the housing (11) and is driven by the motor (25), and into which a spindle (31) is screwed.

6. Belt locking device according to Claim 5, **characterised in that** the spindle (31) bears against the tightening unit (13), is mounted thereon and/or is a component part of the same.

7. Belt locking device according to any one of Claims 1 to 6, **characterised in that** the belt lock (19), the transmission means (21), the tightening unit (13) and the support (29) are in series in respect of the force flow occurring during tightening and when the belt (5) is under load.

8. Vehicle seat, in particular a motor vehicle seat, having a belt locking device (1) according to any one of Claims 1 to 7.

## Revendications

1. - Dispositif de fermeture de ceinture pour un siège de véhicule, en particulier pour un siège de véhicule automobile, avec une fermeture de ceinture (19) disposée de manière amovible pour une ceinture de sécurité (5), une unité de serrage (13), qui est supportée sur un support (29) monté solidaire de la structure, et un moyen de transmission (21) agissant entre l'unité de serrage (13) et la fermeture de ceinture (19), à l'occasion de quoi, en cas de collision, l'unité de serrage (13) tire à l'aide du moyen de transmission (21) la fermeture de ceinture (19) d'une position de départ dans une position de collision, à l'occasion de quoi la position de l'unité de serrage (13) par rapport au support (29) est apte à être modifiée dans la direction longitudinale du moyen de transmission (21) et une modification de position de l'unité de serrage (13) déplace la fermeture de ceinture (19) à l'aide du moyen de transmission (21), **caractérisé par le fait que**, pour une fonction de confort, l'unité de serrage (13) est apte à être modifiée dans sa position par un moteur (25), à l'occasion de quoi la fermeture de ceinture (19) sort davantage, après qu'un occupant a pris place sur le siège de véhicule (3), et après l'installation complète de la ceinture de sécurité (5), le moteur rétracte à nouveau la fermeture de ceinture (19).

2. - Dispositif de fermeture de ceinture selon la revendication 1, **caractérisé par le fait que** le moyen de transmission (21) est réalisé résistant à la traction et/ou résistant à la pression et/ou flexible.

3. - Dispositif de fermeture de ceinture selon l'une des revendications 1 ou 2, **caractérisé par le fait que** le support (29) est monté dans un boîtier (11) solidaire de la structure.

4. - Dispositif de fermeture de ceinture selon la revendication 3, **caractérisé par le fait que** le moteur (25) est disposé dans le boîtier (11).

5. - Dispositif de fermeture selon l'une des revendications 3 ou 4, **caractérisé par le fait que** le support est un écrou de broche (29) monté à rotation dans le boîtier (11), actionné par le moteur (25), écrou de broche dans lequel une broche (31) est montée par vissage.

6. - Dispositif de fermeture de ceinture selon la revendication 5, **caractérisé par le fait que** la broche (31) adjacente à l'unité de serrage (13) est rapportée sur celle-ci et/ou forme un constituant de cette dernière.

7. - Dispositif de fermeture de ceinture selon l'une des revendications 1 à 6, **caractérisé par le fait que** la fermeture de ceinture (19), le moyen de transmission (21), l'unité de serrage (13) et le support (29) sont situés en série par rapport au flux des forces qui se produit lors du serrage et lors de la sollicitation de la ceinture (5).

8. - Siège de véhicule, en particulier siège de véhicule automobile, avec un dispositif de fermeture de ceinture (1) tel que défini à l'une des revendications 1 à 7.
